**Europäisches Patentamt**

**European Patent Office**

**Office européen des brevets**

(19)

(11) Veröffentlichungsnummer: **0 308 738 B1**

(12) # EUROPÄISCHE PATENTSCHRIFT

(45) Veröffentlichungstag der Patentschrift: **04.03.92**

(51) Int. Cl.⁵: **A61C 8/00**

(21) Anmeldenummer: **88114719.3**

(22) Anmeldetag: **09.09.88**

(54) **Kronen-Befestigungsvorrichtung für ein in einen Kiefer einzusetzendes Implantat.**

(30) Priorität: **17.09.87 DE 3731265**

(43) Veröffentlichungstag der Anmeldung:
**29.03.89 Patentblatt 89/13**

(45) Bekanntmachung des Hinweises auf die
Patenterteilung:
**04.03.92 Patentblatt 92/10**

(84) Benannte Vertragsstaaten:
**AT BE CH DE ES FR GB GR IT LI LU NL SE**

(56) Entgegenhaltungen:
**EP-A- 0 158 333**
**US-A- 4 552 532**

(73) Patentinhaber: **Richter, Ernst-Jürgen,
Dr.med.dent. et Dipl.-Ing.
Schlossparkstrasse 56
W-5100 Aachen(DE)**

(72) Erfinder: **Richter, Ernst-Jürgen, Dr.med.dent.
et Dipl.-Ing.
Schlossparkstrasse 56
W-5100 Aachen(DE)**

(74) Vertreter: **Spalthoff, Adolf, Dipl.-Ing.
Pelmanstrasse 31 Postfach 34 02 20
W-4300 Essen 1(DE)**

## Beschreibung

Die Erfindung betrifft eine Kronen-Befestigungsvorrichtung für ein in einen Kiefer einzusetzendes Implantat nach dem Oberbegriff des Patentanspruchs 1.

Es ist ein Implantatsystem mit elastischem Puffer bekannt, welches einen in einen Kiefer einzusetzenden Implantatkörper aufweist, in den als elastischer Puffer ein sog. intramobiles Element eingeschraubt ist, welches aus Kunststoff besteht. Dieses intramobile Element hat im wesentlichen die Form einer Zylinderbüchse. Das Pufferelement ist von einer Distanzhülse umgeben, die sich einerseits auf dem Implantatkörper und andererseits auf der Unterseite eines Flansches am oberen Ende des intramobilen Elements abstützt. In eine mittige Gewindebohrung des Pufferelementes ist ein sog. Implantatpfosten eingeschraubt, welcher das Verbindungsstück zur Krone darstellt, die mit einem Schraubbolzen in ein Innengewinde des Implantatpfostens einschraubbar ist. Dieses bekannte Implantatsystem weist den Nachteil auf, daß bei der Verformung des elastischen Puffers in radialer Richtung Spalte und/oder Mikro-Kohlräume entstehen, welche eine Verschmutzung begünstigen und damit das Eindringen von Bakterien in das periimplantäre Gewebe ermöglichen mit der Folge, daß das Implantatlagergewebe nicht dauerhaft am künstlichen Pfeiler anwachsen kann. Dies kann langfristig zu entzündlichen Erscheinungen führen, die durch Knochenabbauvorgänge als destruktive Folge den Verlust des Implantates nach sich ziehen können. Selbst wenn der elastische Puffer unter einer gewissen Vorspannung steht, reicht dieses nicht aus, um das Entstehen von Spalten od.dgl. mit Sicherheit auszuschließen, da die Vorspannung wegen des Kriechverhaltens des elastischen Kunststoffmaterials abnimmt.

Die EP-A-0158333 zeigt eine Kronen-Befestigungsvorrichtung für ein in einem Kiefer einzusetzendes Implantat mit einem koronalseitig auf dem Implantat befestigbaren und implantatseitig mit einem axial vorragenden Zapfen versehenen Kronen-Verbindungsstück für einen prothetischen Kronenteil. Zwischen einem Kupplungsstück des Implantats und dem Kronen-Verbindungsstück ist ein Puffer aus einem elastischem Werkstoff angeordnet. Der Puffer ist mindestens in den Bereichen seiner äußeren Auflageflächen mit den diesen zugeordneten Bereichen der Stirnflächen des Kupplungsstücks und des Kronen-Verbindungsstücks fest verbunden. Das koronalseitige Endteil des Kupplungsstücks weist eine zylindrische Ausnehmung auf. Der Puffer ist so ausgebildet bzw. angeordnet, daß er jedwede unmittelbare Anlage zwischen dem Kronen-Verbindungsstück und dem Kupplungsstück zuverlässig ausschließt, d.h. der Puffer umgibt sämtliche Flächenabschnitte des Kronen-Verbindungsstücks, die dem Kupplungsstück gegenüberliegen. Somit ist die Beweglichkeit des Kronen-Verbindungsstücks in bezug auf das Kupplungsstück allein durch die Eigenschaften des Puffers begrenzt bzw. eingeschränkt.

Ausgehend von dem vorstehend geschilderten Stand der Technik liegt der Erfindung die Aufgabe zugrunde, eine Kronen-Befestigungsvorrichtung zu schaffen, bei der trotz der Anordnung eines Puffers zwischen dem Kronen-Verbindungsstück und dem Kupplungsstück insbesondere die radiale Versetzbarkeit des Kronen-Verbindungsstücks in bezug auf das Kupplungsstück unabhängig von der durch den Puffer aufnehmbaren Versetzung eingeschränkt ist. Darüber hinaus soll die zu schaffende Kronen-Befestigungsvorrichtung einfach handhabbar sein und langfristig das Auftreten von radialen Spalten sowie Mikro-Hohlräumen praktisch ausschließen.

Diese Aufgabe wird erfindungsgemäß dadurch gelöst, daß sich der Zapfen des Kronen-Verbindungsstücks durch den Puffer in die Ausnehmung des koronalseitigen Endteils des Kupplungsstücks erstreckt und daß zwischen einem ersten, koronalseitigen Abschnitt des Zapfens und einem diesen aufnehmenden Bereich der Ausnehmung des koronalseitigen Endteils des Kupplungsstücks eine Spielpassung vorhanden ist. Durch die erfindungsgemäßen Maßnahmen können die elastischen Verformungseigenschaften des Puffers in denjenigen Richtungen voll ausgenutzt werden, in denen sie für die langfristige Stabilität der Kronen-Befestigungsvorrichtung keine Gefährdungen verursachen, während Relativbewegungen zwischen dem Kronen-Verbindungsstück und dem Kupplungsstück in den für die Stabilität der Kronen-Befestigungsvorrichtung nachteiligen Richtungen, insbesondere in der Radialrichtung, soweit eingeschränkt werden, daß eine Gefährdung der Kronen-Befestigungsvorrichtung sicher ausgeschlossen wird. In dem Augenblick, in dem eine radiale Versetzung zwischen dem Kupplungsstück und dem Kronen-Verbindungsstück eine vorgegebene Maximalgröße überschreitet, gerät der Zapfen des Kronen-Verbindungsstücks in unmittelbare Anlage gegen die im oberen Bereich des Kupplungsstücks ausgebildete Ausnehmung; eine weitere radiale Versetzung ist somit dann verhindert.

Die zur vorteilhaften Ausgestaltung der Erfindung dienenden Merkmale sind Gegenstand der Unteransprüche.

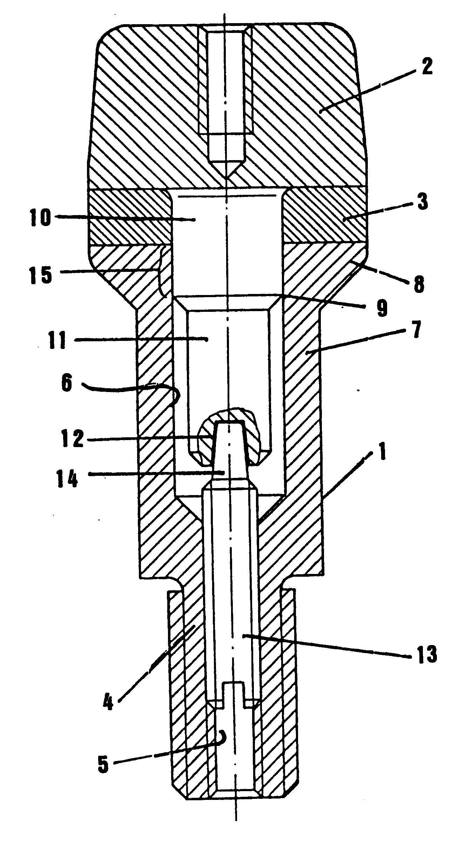

Ein Ausführungsbeispiel der Erfindung ist an Hand der Zeichnung näher erläutert, und zwar zeigt diese eine geschnittene Ansicht der Kronen-Befestigungsvorrichtung.

Mit 1 ist das Kupplungsstück bezeichnet, an dem koronalseitig das Kronen-Verbindungsstück 2 in einer noch zu beschreibenden Weise befestigt ist. Zwischen dem Kupplungsstück 1 und dem Kronen-Verbindungsstück 2 ist ein Puffer 3 aus elastischem Kunststoff, vorzugsweise einem Elastomer, angeordnet. Der elastische Puffer 3 ist mit seinen äußeren Auflageflächen mit den diesen zugeordneten Stirnflächen des Kupplungsstückes 1 und des Kronen-Verbindungsstückes 2 fest verbunden, beispielsweise durch Vulkanisieren, Kleben usw. Durch die feste Verbindung dieser drei Bauteile wird eine radiale Spaltbildung zwischen diesen sowie die Ausbildung von Mikro-Hohlräumen mit Sicherheit ausgeschlossen und damit die Gefahr des Eindringens von Bakterien, Verunreinigungen usw. Der elastische Puffer 3 ist ringscheibenförmig ausgebildet.

Das eine Endteil 4 des Kupplungsstückes 1 ist von einer Gewindebohrung 5 durchsetzt, welche in eine zylinderförmige Ausnehmung 6 größeren Durchmessers des anderen Endteils 7 übergeht. Die Wandung des anderen Endteils 7 des Kupplungsstückes 1 weist an ihrem freien Ende eine sich nach außen erstreckende Verdickung 8 auf, auf deren Stirnfläche der ringscheibenförmige Puffer 3 aufliegt und mit dieser bündig verläuft.

Das Kronen-Verbindungsstück 2 ist implantatseitig mit einem axial verlaufenden Zapfen 9 versehen, welcher sich durch den ringscheibenförmigen Puffer 3 hindurch in die kreisförmige Ausnehmung 6 des anderen Endteiles 7 des Kupplungsstückes 1 erstreckt. Der Zapfen 9 besitzt zwei Abschnitte 10, 11 von denen der erste Abschnitt 10 grösseren Durchmessers in den zweiten Abschnitt 11 kleineren Durchmessers übergeht. Das freie Ende des Zapfens 9 ist mit einer sich axial in diesen erstreckenden Vertiefung 12 ausgerüstet, welche sich von außen nach innen konisch verjüngend ausgebildet ist.

In die Gewindebohrung 5 des Kupplungsstükkes 1 ist eine Madenschraube 13 eingeschraubt, deren kronenseitiges Ende einen gewindefreien Kopf 14 aufweist, welcher sich in die Vertiefung 12 des Zapfens 9 erstreckt und dieser in seiner Formgebung angepaßt ist, im vorliegenden Falle also sich ebenfalls zu seinem freien Ende hin konisch verjüngt.

Zwischen dem ersten Abschnitt 10 des Zapfens 9 und dem diesen aufnehmenden Bereich der Ausnehmung 6 des anderen Endteils 7 des Kupplungsstücks 1 ist eine Spielpassung vorhanden. Der Bereich der Spielpassung ist mit 15 bezeichnet.

Zwischen dem Boden der Vertiefung 12 des Zapfens 9 und der Stirnseite des Kopfes 14 der Madenschraube 13 kann eine elastische Einlage angeordnet sein.

Die konische Vertiefung 12 dient als Anschlag bei axialer und orthogonaler Auslenkung, da zwischen dem Kopf 14 und der Vertiefung 12 des Zapfens 9 ein geringfügiges Spiel vorhanden ist. Dieses ist über den Kopf 14 der Madenschraube 13 einstellbar, so daß sich ein justierbares Widerlager ergibt.

Das Ausmaß der ersten Phase der axialen Verschieblichkeit des Kronen-Verbindungsstückes 2 gegenüber dem Kupplungsstück 1 wird durch Justieren der Madenschraube 13 festgelegt.

Die Verwirklichung der ersten Phase der orthogonalen Verschieblichkeit wird dadurch erreicht, daß sich das Kronen-Verbindungsstück unter Last aus seiner durch den Puffer 3 definierten Mittellage zur Seite bewegt, bis das Spiel im Bereich 15 zwischen dem ersten Abschnitt 10 des Zapfens 9 und dem diesen zugeordneten Bereich der Ausnehmung 6 des Kupplungsstückes 1 und im (zweiten) Anschlag, gebildet durch Kopf 14 der Madenschraube 13 in Verbindung mit der Vertiefung 12 des Zapfens 9, aufgehoben ist.

Zwischen dem Kronen-Verbindungsstück 2 und dem Kupplungsstück 1 treten keinerlei Reibungs- und Verspanneffekte auf, weil diese durch Kleben o.ä. ohne Vorspannung fest über den elastischen Puffer 3 verbunden sind.

Das für den Puffer ausgewählte elastische Material verfügt über ausreichende Rückstelleigenschaften nach axialer bzw. orthogonaler Belastung.

Das Ausmaß der zweiten Phase der axialen Verschieblichkeit wird durch die Abmessungen der Bereiche 10 und 11 des Zapfens 9 und des Kopfes 14 der Madenschraube 13 festgelegt, da diese bei Axiallast gestaucht werden oder durch die Eigenschaften einer elastischen Einlage, die im Bodenbereich der Vertiefung 12 angeordnet sein kann.

Das Ausmaß der zweiten Phase der orthogonalen Auslenkbarkeit wird durch Wahl einer geeigneten Länge des Zapfens 9 sowie des Durchmessers desselben und aufgrund der Beigeeigenschaften durch den Werkstoff festgelegt.

Die erfindungsgemäße Kronen-Befestigungsvorrichtung weist im Inneren einen Hohlraum auf, der zur Erreichung der gewünschten zweistufigen Beweglichkeit in axialer und orthogonaler Richtung erforderlich ist, welche aber aufgrund der festen Verbindung zwischen dem Puffer 3 und dem Kupplungsstück 1 einerseits sowie dem Kronen-Verbindungsstück 2 andererseits völlig dicht abgeschlossen ist.

**Patentansprüche**

1. Kronen-Befestigungsvorrichtung für ein in einen Kiefer einzusetzendes Implantat mit einem koronalseitig auf dem Implantat befestigbaren, implantatseitig mit einem axial vorragenden Zapfen (9) versehenen Kronen-Verbindungsstück (2) für einen prothetischen Kronenteil, wobei zwischen einem Kupplungsstück (1) des Implantats und dem Kronen-Verbindungsstück (2) ein Puffer (3) aus elastischem Werkstoff angeordnet ist, der mindestens in den Bereichen seiner äußeren Auflageflächen mit den diesen zugeordneten Bereichen der Stirnflächen des Kupplungsstücks (1) und des Kronen-Verbindungsstücks (2) fest verbunden ist, wobei das koronalseitige Endteil des Kupplungsstücks (1) eine zylindrische Ausnehmung (6) aufweist, dadurch gekennzeichnet, daß sich der Zapfen (9) des Kronen-Verbindungsstücks (2) durch den Puffer (3) in die Ausnehmung (6) des koronalseitigen Endteils (7) des Kupplungsstücks (1) erstreckt und daß zwischen einem ersten, koronalseitigen Abschnitt (10) des Zapfens (9) und einem diesen aufnehmenden Bereich (15) der Ausnehmung (6) des koronalseitigen Endteils (7) des Kupplungsstücks (1) eine Spielpassung vorhanden ist.

2. Kronen-Befestigungsvorrichtung nach Anspruch 1, dadurch gekennzeichnet, daß der elastische Puffer (3) ringscheibenförmig ausgebildet ist.

3. Kronen-Befestigungsvorrichtung nach Anspruch 1 oder 2, dadurch gekennzeichnet, daß die Wandung des koronalseitigen Endteils (7) des Kupplungsstücks (1) an ihrem freien Ende eine sich nach außen erstreckende Verdickung (8) aufweist.

4. Kronen-Befestigungsvorrichtung nach einem der Ansprüche 1 bis 3, dadurch gekennzeichnet, daß der Puffer (3) bündig mit der Stirnfläche des koronalseitigen Endteils (7) des Kupplungsstücks (1) verläuft.

5. Kronen-Befestigungsvorrichtung nach einem der Ansprüche 1 bis 4, dadurch gekennzeichnet, daß der koronalseitige Abschnitt (10) des Zapfens (9) in einen implantatseitigen Abschnitt (11) kleineren Durchmessers übergeht.

6. Kronen-Befestigungsvorrichtung nach einem der Ansprüche 1 bis 5, dadurch gekennzeichnet, daß das freie Ende des Zapfens (9) mit einer sich axial in diesen erstreckenden Vertiefung (12) ausgerüstet ist.

7. Kronen-Befestigungsvorrichtung nach Anspruch 6, dadurch gekennzeichnet, daß die Vertiefung (12) sich von außen nach innen konisch verjüngend ausgebildet ist.

8. Kronen-Befestigungsvorrichtung nach einem der Ansprüche 1 bis 7, dadurch gekennzeichnet, daß das implantatseitige Endteil (4) des Kupplungsstücks (1) von einer Gewindebohrung (5) durchsetzt ist, die einen kleineren Durchmesser als die Ausnehmung (6) im koronalseitigen Endteil (7) des Kupplungsstücks (1) aufweist, wobei in die Gewindebohrung (5) eine Madenschraube (13) eingeschraubt ist, deren koronalseitiges Ende einen gewindefreien Kopf (14) aufweist, der sich in die Vertiefung (12) des Zapfens (9) des Kronen-Verbindungsstücks (2) erstreckt.

9. Kronen-Befestigungsvorrichtung nach Anspruch 8, dadurch gekennzeichnet, daß der Kopf (14) der Madenschraube (13) der Formgebung der Vertiefung (12) des Zapfens (9) angepaßt ist.

10. Kronen-Befestigungsvorrichtung nach Anspruch 8 oder 9, dadurch gekennzeichnet, daß zwischen dem Kopf (14) der Madenschraube (13) und der Vertiefung (12) des Zapfens (9) ein geringfügiges Spiel vorhanden ist.

11. Kronen-Befestigungsvorrichtung nach einem der Ansprüche 8 bis 10, dadurch gekennzeichnet, daß sich zwischen dem Boden der Vertiefung (12) des Zapfens (9) und der Stirnseite des Kopfes (14) der Madenschraube (13) eine elastische Einlage befindet.

**Claims**

1. A crown fitting device for an implant which is to be inserted into a jaw and comprising a crown connecting piece (2) provided with an axially projecting peg (9) at the implant and adapted to be fitted on the implant at the coronal end, and intended for a prosthetic crown part, and having, between a coupling piece (1) of the implant and the crown connecting piece (2), a buffer (3) of flexible material and rigidly connected at least in the areas of its outer bearing surfaces with associated areas of the end faces of the coupling piece (1) and of the crown connecting piece (2), the coronal end part of the coupling piece (1) having a cylindrical recess (6), characterised in that the peg (9) on the crown connecting piece (2) extends through the buffer (3) into the recess (6) in the coronal end part (7) of the coupling piece (1) and in that a clearance fit is provided between a first coronal end portion (10) of the peg (9) and an area (15) of the recess (6) in the coronal end part (7) of the coupling piece (1) intended to receive the said end portion (10).

2. A crown fitting device according to Claim 1, characterised in that the flexible buffer (3) is shaped like an annular disc.

3. A crown fitting device according to Claim 1 or 2, characterised in that the walls of the coronal end part (7) of the coupling piece (1) have an outwardly extending thickening (8) at their free end.

4. A crown fitting device according to one of Claims 1 to 3, characterised in that the buffer (3) extends flush with the end face of the coronal end part (7) of the coupling piece (1).

5. A crown fitting device according to one of Claims 1 to 4, characterised in that the coronal portion (10) of the peg (9) merges into a smaller diameter portion (11) at the implant end.

6. A crown fitting device according to one of Claims 1 to 5, characterised in that the free end of the peg (9) is provided with a depression (12) extending axially into this latter.

7. A crown fitting device according to Claim 6, characterised in that the depression (12) is constructed to taper conically inwardly from outside.

8. A crown fitting device according to one of Claims 1 to 7, characterised in that the implant end portion (4) of the coupling piece (1) is traversed by a screw-threaded bore (5) having a smaller diameter than the recess (6) in the coronal end part (7) of the coupling piece (1), a grub screw (13) being screwed into the screw-threaded bore (5) and having at its coronal end a thread-free head (14) which extends into the depression (12) in the peg (9) in the crown connecting piece (2).

9. A crown fitting device according to Claim 8, characterised in that the head (14) of the grub screw (13) is adapted to the shape of the depression (12) in the peg (9).

10. A crown fitting device according to Claim 8 or 9, characterised in that there is a slight clearance between the head (14) of the grub screw (13) and the depression (12) in the peg (9).

11. A crown fitting device according to one of Claims 8 to 10, characterised in that a flexible insert is provided between the bottom of the depression (12) of the peg (9) and the end face of the head (14) of the grub screw (13).

**Revendications**

1. Dispositif de fixation d'une couronne pour un implant à mettre en place dans une mâchoire comportant un élément de montage (2) pour une couronne de prothése qui peut être fixé sur l'implant côté couronne et est muni d'une tige (9) faisant saillie axialement côté implant, un coussin (3) en matériau élastique étant disposé entre un élément d'accouplement (1) de l'implant et l'élément de montage de la couronne (2), lequel coussin est lié fermement, au moins dans la région de ses portées extérieures, aux parties correspondantes des surfaces frontales de l'élément d'accouplement (1) et de l'élément de montage de la couronne (2), la partie terminale côté couronne de l'élément d'accouplement (1) présentant un évidement cylindrique (6), caractérisé en ce que la tige (9) de l'éléments de montage de la couronne (2) s'étend à travers le coussin (3) dans l'évidement (6) de la partie terminale (7) de l'élément d'accouplement (1) et en ce qu'un assemblage avec jeu est réalisé entre une première partie (10), côté couronne, de la tige (9) et une zone (15) recevant celle-ci de l'évidement (6) de la partie terminale (7), côté couronne, de l'élément d'accouplement (1).

2. Dispositif de fixation d'une couronne selon la revendication 1, caractérisé en ce que le coussin élastique (3) a la forme d'une rondelle annulaire.

3. Dispositif de fixation d'une couronne selon la revendication 1 ou 2, caractérisé en ce que la paroi de la partie terminale (7), côté couronne, de l'élément d'accouplement (1) comporte à son extrémité libre un renflement (8) qui s'étend vers l'extérieur.

4. Dispositif de fixation d'une couronne selon l'une des revendications 1 à 3, caractérisé en ce que le coussin (3) affleure la surface frontale de la partie terminale (7), côté couronne, de l'élément d'accouplement (1).

5. Dispositif de fixation d'une couronne selon l'une des revendications 1 à 4, caractérisé en ce que la partie (10) côté couronne de la tige (9) se raccorde à une partie (11), côté implant, de diamètre plus faible.

6. Dispositif de fixation d'une couronne selon l'une des revendication 1 à 5, caractérisé en ce que l'extrémité libre de la tige (9) est munie d'une cavité (12) qui sétend axialement à l'intérieur de celle-ci.

7. Dispositif de fixation d'une couronne selon la revendication 6, caractérisé en ce que la cavité (12) est agencée en forme de cône dont le diamètre décroît de l'extérieur vers l'intérieur.

8. Dispositif de fixation d'une couronne selon l'une des revendications 1 à 7, caractérisé en ce que la partie terminale (4) côté implant de l'élément d'accouplement (1) est traversée par un taraudage (5) qui a un diamètre inférieur à celui de l'évidement (6) dans la partie terminale (7) côté couronne de l'élément d'accouplement (1), une vis sans tête (13) étant vissée dans le taraudage (5), vis dont l'extrémité côté couronne comporte un têton non fleté (14) qui pénètre dans la cavité (12) de la tige (9) de l'élément de montage de la couronne (2).

9. Dispositif de fixation d'une couronne selon la revendication 8, caractérisé en ce que le têton (14) de la vis sans tête (13) est adapté à la forme de la cavité (12) de la tige (9).

10. Dispositif de fixation d'une couronne selon la revendication 8 ou 9, caractérisé en ce qu'un faible jeu existe entre le têton (14) de la vis sans tête (13) et la cavité (12) de la tige (9).

11. Dispositif de fixation d'une couronne selon l'une des revendications 8 à 10, caractérisé en ce qu'une couche élastique est placée entre le fond de la cavité (12) de la tige (9) et la face frontale du têton (14) de la vis sans tête (13).